Europäisches Patentamt

European Patent Office

Office européen des brevets

(19)

(11) Veröffentlichungsnummer: **0 289 712 B1**

## (12) EUROPÄISCHE PATENTSCHRIFT

(45) Veröffentlichungstag der Patentschrift:
15.05.91 Patentblatt 91/20

(51) Int. Cl.⁵: **B60T 17/18**

(21) Anmeldenummer: **88102137.2**

(22) Anmeldetag: **13.02.88**

(54) **Druckregelventil.**

(30) Priorität: **07.05.87 DE 3715148**

(43) Veröffentlichungstag der Anmeldung:
**09.11.88 Patentblatt 88/45**

(45) Bekanntmachung des Hinweises auf die
Patenterteilung:
**15.05.91 Patentblatt 91/20**

(84) Benannte Vertragsstaaten:
**DE FR GB IT**

(56) Entgegenhaltungen:
**EP-A- 0 097 223**

(73) Patentinhaber: **WABCO Westinghouse
Fahrzeugbremsen GmbH
Am Lindener Hafen 21 Postfach 91 12 80
W-3000 Hannover 91 (DE)**

(72) Erfinder: **Deike, Karl-Heinz, Ing.(grad.)
Feldstrasse 17
W-3017 Pattensen 5 (DE)**
Erfinder: **Kiel, Bernd, Ing.(grad.)
Barnestrasse 40
W-3050 Wunstorf 1 (DE)**
Erfinder: **König, Heinz-Werner
Behnsenhof 5
W-3013 Barsinghausen 8 (DE)**

(74) Vertreter: **Schrödter, Manfred
WABCO Westinghouse Fahrzeugbremsen
GmbH Am Lindener Hafen 21 Postfach 91 12
80
W-3000 Hannover 91 (DE)**

## Beschreibung

Die Erfindung betrifft ein Druckregelventil gemäß dem Oberbegriff des Patentanspruchs 1.

Ein derartiges Druckregelventil ist aus der DE-OS 32 22 247 bzw. EP-A1-0097223 bekannt.

Bei diesem bekannten Druckregelventil wird eine Ventileinrichtung, über welche eine einen Druckmitteleingang mit einem Druckmittelausgang verbindende Druckmittelkammer mit einem zur Atmosphäre hin führenden Druckmittelauslaß verbindbar ist, von einem Betätigungskolben betätigt. Die Ventileinrichtung hat die Funktion eines vom Betätigungskolben schaltbaren Abschaltventils.

Derartige Druckregelventile haben den Nachteil einer erheblichen Geräuschentwicklung beim Abblasvorgang.

Der Erfindung liegt deshalb die Aufgabe zugrunde, ein Druckregelventil der eingangs erwähnten Art zu schaffen, bei welchem die Gehäuschentwicklung reduziert wird.

Diese Aufgabe wird mit der im Patentanspruch 1 angegebenen Erfindung gelöst. Weiterbildungen und vorteilhafte Ausgestaltungen der Erfindung sind in den Unteransprüchen angegeben.

Die Erfindung bietet insbesondere den Vorteil, ein Druckregelventil zu erhalten, bei welchem durch eine sich während der Betätigung der Ventileinrichtung selbsttätig zuschaltende zusätzliche Wirkfläche am Betätigungskolben, gebildet von einem gegen ein am Betätigungskolben zur Anlage bringbares Dichtelement, der Abschaltvorgang (Öffnungsvorgang der Ventileinrichtung) zuerst verlangsamt erfolgt und dann beschleunigt fortgesetzt wird. Da der Öffnungsquerschnitt der Ventileinrichtung zuerst verlangsamt und dann erst beschleunigt freigegeben wird, erfolgt der Austritt der Druckluft aus der Druckmittelkammer nicht schlagartig. Die Folge ist eine erheblich verringerte Geräuschbildung.

Ein Druckregelventil hat üblicherweise zusätzlich zu seiner Abschaltfunktion noch die Funktion eines Sicherheitsventils, so daß auch bei Funktionsausfall des Betätigungskolbens bei Erreichen eines vorbestimmten Druckes in der Druckmittelkammer das Abschaltventil in die Offenstellung gebracht wird. Durch die sich selbsttätig zuschaltende Wirkfläche am Betätigungskolben wird der Vorteil erzielt, den vom Druckmittel in der Druckmittelkammer beaufschlagten Ventilkörper für das Abschaltventil vergrößern zu können, um eine verbesserte Sicherheitsventilfunktion zu erhalten, ohne daß sich dadurch die Betätigungskräfte aufgrund einer stärkeren Schließfeder für das Abschaltventil erhöhen würden.

Im allgemeinen ist ein Druckregelventil mit Sicherheitsfunktion so ausgebildet und so bemessen, daß der Durchmesser der vom Druckmittel in der Druckmittelkammer in Öffnungsrichtung beaufschlagten Wirkfläche des Ventilkörpers für das Abschaltventil größer ist als der Durchmesser der den Betätigungskolben aufnehmenden Gehäusebohrung.

Durch eine solche Ausbildung wird erreicht, daß die Ventileinrichtung auch bei Funktionsausfall des Betätigungskolbens bei erreichen eines vorbestimmten Druckes in der Druckmittelkammer in die Offenstellung bringbar ist.

Problematisch ist bei einem derartigen Druckregelventil die Bemessung der vom Druck in der Druckmittelkammer beaufschlagten Wirkfläche des Ventilkörpers der Ventileinrichtung.

Wird eine große Ventilfläche gewählt, um die Sicherheitsventilfunktion dieser Ventileinrichtung zu gewährleisten, so ist die Anordnung einer starken Schließfeder für die Ventileinrichtung erforderlich. Dies hat zur Folge, daß zum Bewegen des Betätigungskolbens in Öffnungsrichtung der Ventileinrichtung eine große Kraft, d.h. ein hoher Druck erforderlich ist.

Der Öffnungsvorgang der Ventileinrichtung wird bei normalem Betrieb, d.h. bei der Funktion der Ventileinrichtung als vom Betätigungskolben betätigtes Abschaltventil, verzögert.

Wird die Wirkfläche des Ventilkörpers relativ klein bemessen, so ist wiederum nicht unter allen Einsatzbedingungen eine gute Sicherheitsventilfunktion gewährleistet.

Diese Probleme sind gemäß der Erfindung auf die im Vorstehenden beschriebene Art und Weise in vorteilhafter Weise beseitigt.

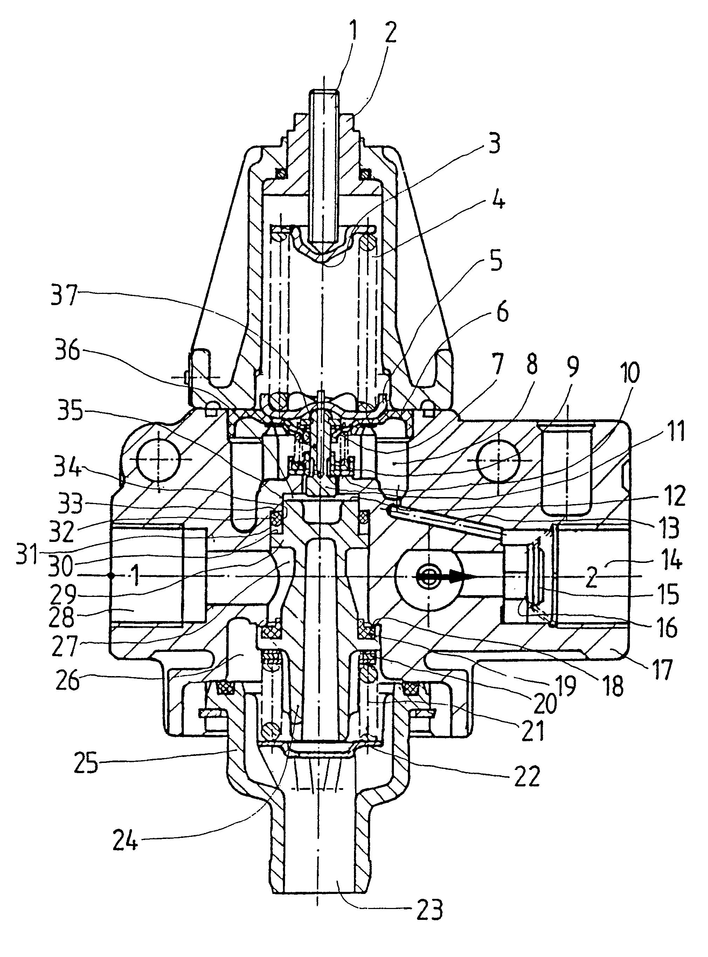

Anhand der Abbildung wird nachfolgend ein Ausführungsbeispiel der Erfindung näher erläutert.

Die Abbildung zeigt ein Druckregelventil mit einer am Betätigungskolben angeordneten zuschaltbaren zusätzlichen Wirkfläche.

In der Abbildung ist ein Ventilgehäuse (17) dargestellt mit einem Druckmitteleingang (28), welcher mit einem nicht dargestellten, als Druckmittelquelle dienenden Drucklufterzeuger verbunden ist, sowie mit einem Druckmittelausgang (14), an den ein hier nicht gezeigter, als Verbraucher dienender Druckluft-Vorratsbehälter angeschlossen ist. Im Druckmittelausgang (14) ist ein in Strömungsrichtung öffnendes Rückschlagventil (15, 16) angeordnet. Zwischen einem zur Aufnahme einer als Regelelement dienenden Regelfeder (4) vorgesehenen Gehäusedeckel (2) und dem Ventilgehäuse (17) ist ein als Membran ausgebildeter Regelkolben (6) angeordnet, welcher über einen oberhalb des Regelkolbens (6) angeordneten ersten Federteller (5) unter Spannung der Regelfeder (4) steht, wobei diese Spannung mittels eines Gewindestiftes (1), welcher an einem zweiten Federteller (3) angreift, einstellbar ist.

Unter dem Regelkolben (6) befindet sich eine als erste Steuerkammer (8) dienende Druckmittelkammer, deren Beaufschlagung über einen mit dem Druckmittelausgang (14) in Verbindung stehenden Kanal (13) erfolgt.

Ein am ersten Federteller (5) aufliegender, den Regelkolben (6) und die erste Steuerkammer (8) zentral durchdringender Stößel (37) bildet mit seinem als Ventilsitz (11) ausgebildeten Ende und einem Ventilkörper (9), der gleichfalls von dem Stößel (37) durchdrungen wird, ein Auslaßventil (11, 9) einer ersten Ventileinrichtung. Der erwähnte Ventilkörper (9) bildet in Doppelfunktion mit einem gehäusefesten Ventilsitz (10) ein Einlaßventil (9, 10) der ersten Ventileinrichtung (9, 10, 11). Eine zwischen der Unterseite des Regelkolbens (6) und dem Ventilkörper (9) angeordnete Druckfeder (7) hält den Ventilkörper (9) in schwacher Spannung gegen den Ventilsitz (10).

Ein im unteren Teil des Gehäuses (17) geführter Betätigungskolben (24) für eine zweite Ventileinrichtung, dessen Druckbeaufschlagung über eine über das offene Einlaßventil (10, 9) der ersten Ventileinrichtung (9, 10, 11) mit der ersten Steuerkammer (8) verbundene zweite Steuerkammer (36) erfolgt, bildet mit einem am unteren Ende befestigten Ventilkörper (19) und einem gehäusefesten Ventilsitz (18) die als zweites Auslaßventil (19, 18) ausgebildete zweite Ventileinrichtung (19, 18). Dabei spannt eine unterhalb des Betätigungskolbens (24) angeordnete und sich auf einem ringförmigen Vorsprung (22) im Gehäuse abstützende Druckfeder (21) den Betätigungskolben (24) über ein Zwischenglied (20) in Schließstellung des zweiten Auslaßventils (19, 18) vor. Der Regelkolben (Membran 6) steht mit dem zweiten Auslaßventil (19, 18) in Wirkverbindung, und zwar in der Weise, daß bei einer Bewegung des Regelkolbens (6) in Öffnungsrichtung des Einlaßventils (9, 10) Druckmittel aus der ersten Steuerkammer (8) in die zweite Steuerkammer (36) gelangt und den Betätigungskolben (24) in Öffnungsrichtung des zweiten Auslaßventils (19, 18) betätigt. Eine mit einer als Druckmittelauslaß dienenden Öffnung (23) in einem Gehäuseteil (25) in Verbindung stehende Druckmittelauslaßkammer (26) dient bei Erreichen des Abschaltdruckes zur Entlüftung der vom Kompressor geförderten Druckluft ins Freie.

Der Betätigungskolben (24) für die zweite Ventileinrichtung (19, 18) weist eine die zweite Steuerkammer (36) begrenzende erste Wirkfläche (12) auf, die mit dem Druck in der zweiten Steuerkammer (36) in Öffnungsrichtung der zweiten Ventileinrichtung (19, 18) beaufschlagbar ist.

Der die erste Wirkfläche (12) aufweisende Endbereich des Betätigungskolbens (24) wird von einem als O-Ring ausgebildeten Dichtelement (32) umschlossenen, welches die zweite Steuerkammer (36) und die den Druckmitteleingang (28) mit dem Druckmittelausgang (14) verbindende Druckmittelkammer (27) gegeneinander abdichtet. Auf wenigstens einem Teil des Umfangs des Betätigungskolbens (24) ist ein als ein erster Anschlag (29, 30) für das Dichtelement (32) dienender, sich radial nach außen erstreckender Vorsprung angeordnet. Der erste Anschlag (29, 30) ist so angeordnet, daß er auf der Seite des Dichtelementes (32) gelegen ist, die der zweiten Steuerkammer (36) abgewandt ist. Der erste Anschlag (29, 30) erstreckt sich radial bis an eine Wand (31), welche eine Gehäuseausnehmung begrenzt, die an die zweite Steuerkammer (36) anschließt und mit der die zweite Steuerkammer (36) radial begrenzenden Wand (35) eine Stufe (31, 33, 35) bildet. Die Fläche (33) der Stufe (31, 33, 35) bildet einen gehäusefesten zweiten Anschlag (33) für das Dichtelement (32), wobei der zweite Anschlag (33) auf der der zweiten Steuerkammer (36) zugewandten Seite des Dichtelementes (32) gelegen ist.

Der Durchmesser des die erste Wirkfläche (12) aufweisenden Endbereiches des Betätigungskolbens (24) ist so ausgelegt, daß zwischen der die zweite Steuerkammer (36) radial begrenzenden Wand (35) und der Mantelfläche (34) des die erste Wirkfläche (12) aufweisenden Teiles des Betätigungskolbens (24) ein Spalt verbleibt, durch welchen aus der zweiten Steuerkammer (36) Druckmittel auf die der zweiten Steuerkammer (36) zugewandte Seite des Dichtelementes (32) gelangen kann.

Das Dichtelement (32) ist in Richtung der Längsachse des Betätigungskolbens (24) zwischen den beiden Anschlägen (29, 30) und (33) verschiebbar auf dem Betätigungskolben (24) angeordnet, so daß bei Beaufschlagung des Dichtelementes (32) mit dem Druck aus der zweiten Steuerkammer (36) das Dichtelement (32) am ersten Anschlag (29, 30) zur Anlage kommt und so als eine in Öffnungsrichtung der zweiten Ventileinrichtung (19, 18) wirksam werdende zweite Wirkfläche (32) des Betätigungskolbens (24) dient. Diese zweite Wirkfläche (32) des Betätigungskolbens (24) wird unwirksam, wenn der Druck in der den Druckmitteleingang (28) mit dem Druckmittelausgang (14) verbindenden Druckmittelkammer (27), von dem das Dichtelement (32) auf seiner der zweiten Steuerkammer (36) abgewandten Seite beaufschlagt wird, gleich oder größer ist als der Druck in der zweiten Steuerkammer (36).

Die Funktion des im vorstehenden beschriebenen Druckregelventils wird nachfolgend näher erläutert.

Die vom Kompressor geförderte Druckluft strömt über den Druckmitteleingang (28), die Druckmittelkammer (27), das von der Druckluft in die Offenstellung gebrachte Rückschlagventil (15, 16) und den Druckmittelausgang (14) in den Druckluft-Vorratsbehälter. Durch den zwischen dem ersten Anschlag (29, 30) und der die Ausnehmung für den Anschlag (29, 30) begrenzenden Wand (31) vorgesehenen Spalt gelangt die Druckluft auch auf die der zweiten Steuerkammer (36) abgewandte Seite des Dichtelementes (32) und verschiebt dieses in Richtung auf den gehäusefesten Anschlag (33) zu.

Gleichzeitig gelangt vom Druckmittelausgang (14) über den Kanal (13) Druckluft in die erste Steuerkammer (8) unterhalb des Regelkolbens (6). In der ersten Steuerkammer (8) baut sich nun ein Druck auf, der auf die Unterseite des Regelkolbens (6) wirkt. Sobald dieser Druck größer ist als die mittels des Gewindestiftes (1) eingestellte Spannung der Druckfeder (4), wölbt sich der als Membran ausgebildete Regelkolben (6) nach oben und nimmt dabei den Stößel (37) mit.

Das Auslaßventil (9, 11) der ersten Ventileinrichtung (9, 10, 11) schließt und das Einlaßventil (9, 10) öffnet, so daß die in der ersten Steuerkammer (8) anstehende Druckluft in die zweite Steuerkammer (36) gelangt.

Der sich hier aufbauende Druck beaufschlagt die erste Wirkfläche (12) des Betätigungskolbens (24) und bewegt den Betätigungskolben (24) gegen die Kraft der Feder (21) nach unten.

Das Auslaßventil (19, 18) der zweiten Ventileinrichtung (19, 18) öffnet und die vom Kompressor geförderte Druckluft entweicht durch die Druckmittelauslaßkammer (26) und den Druckmittelauslaß (23) zur Atmosphäre hin. Durch den Spalt zwischen der die zweite Steuerkammer (36) radial begrenzenden Wand (35) und der Mantelfläche (34) des Betätigungskolbens (24) gelangt gleichzeitig Druckluft aus der zweiten Steuerkammer (36) auf die der zweiten Steuerkammer (36) zugewandte Seite des Dichtelementes (32) und belastet dieses in Richtung auf den ersten Anschlag (29, 30) zu. Da die vom Druck in der Druckmittelkammer (27) und die vom Druck in der zweiten Steuerkammer (36) erzeugten, einander entgegengerichtet auf das Dichtelement (32) einwirkenden Kräfte im wesentlichen gleich groß sind, verbleibt das Dichtelement (32) in seiner Lage. Ist der Druck in der den Druckmitteleingang (28) mit dem Druckmittelausgang (14) verbindenden Druckmittelkammer (27) soweit abgesunken, daß die auf das Dichtelement (32) einwirkende Kraft des Druckes in der zweiten Steuerkammer (36) größer wird als die Kraft des entgegen gerichtet auf das Dichtelement (32) einwirkenden Druckes in der Druckmittelkammer (27), wird das Dichtelement (32) nach unten gegen den als erster Anschlag (29, 30) dienenden ringförmigen Vorsprung (29, 30) verschoben und kommt an der Fläche (30) des Anschlages (29, 30) zur Anlage.

Von dem sich am ersten Anschlag (29, 30) abstützenden Dichtelement (32) wird jetzt eine ringförmige zweite Wirkfläche (30, 32) für den Betätigungskolben (24) gebildet. Die sich aus der Addition der ersten Wirkfläche (12) und der in der gleichen Richtung vom Druckmittel in der zweiten Steuerkammer (36) beaufschlagten zweiten Wirkfläche (Dichtelement 32, erster Anschlag 29, 30) ergebende vergrößerte Gesamtwirkfläche am Betätigungskolben (24) bewirkt, daß der Betätigungskolben (24) jetzt beschleunigt in Öffnungsrichtung der zweiten Ventileinrichtung (19, 18) bewegt wird, wodurch sich auch der Auslaßquerschnitt der zweiten Ventileinrichtung (19, 18) beschleunigt vergrößert.

Die vom Kompressor in die Druckmittelkammer (27) geförderte Druckluft entweicht nun weitgehend entspannt durch das geöffnete Auslaßventil der zweiten Ventileinrichtung (19, 18) und den Druckmittelauslaß (23) zur Atmosphäre hin.

Sinkt der Druck im Druckmittel-Vorratsbehälter ab so sinkt auch der Druck in der ersten Steuerkammer (8) ab. Das Einlaßventil (9, 10) der ersten Ventileinrichtung (9, 10, 11) schließt und das Auslaßventil (9, 11) der ersten Ventileinrichtung (9, 10, 11) öffnet. Die zweite Steuerkammer (36) wird über das Auslaßventil (9, 11) der ersten Ventileinrichtung (9, 10, 11) entlüftet. Durch die Kraft der den Betätigungskolben (24) in Schließrichtung des Auslaßventils der zweiten Ventileinrichtung (29, 18) beaufschlagenden Feder (21) wird der Betätigungskolben (24) in Richtung auf die zweite Steuerkammer (36) zu verschoben. Das Auslaßventil der zweiten Ventileinrichtung (19, 18) gelangt ebenfalls in die Schließstellung.

Der sich in der Druckmittelkammer (27) wieder aufbauende Druck bewirkt, daß das Rückschlagventil (15, 16) in die Offenstellung gebracht wird und Druckluft vom Kompressor durch die Druckmittelkammer (27) und das geöffnete Rückschlagventil (15, 16) in den Druckluft-Vorratsbehälter gelangt. Gleichzeitig beaufschlagt die Druckluft aus der Druckmittelkammer (27) das Dichtelement (32) in Richtung auf die zweite Steuerkammer (36) zu. Das Dichtelement (32) löst sich vom ersten Anschlag (29, 30) und kommt am gehäusefesten zweiten Anschlag (33) zur Anlage, so daß das Dichtelement (32) als zweite Wirkfläche für den Betätigungskolben (24) unwirksam wird.

Der am Betätigungskolben (24) angeordnete Anschlag (29, 30) kann als ein ringförmiger umlaufender Vorsprung des Betätigungskolbens (24) ausgebildet sein, wie in der Abbildung dargestellt. Er kann aber auch aus mehreren sich radial nach außen erstreckenden einzelnen Vorsprüngen bestehen, die jedoch so angeordnet und so ausgebildet sein müssen, daß das Dichtelement (32) sich nicht wölben kann.

Der gehäusefeste Anschlag (33) kann sowohl als eine im Gehäuse vorgesehene Stufe (31, 33, 35) ausgebildet sein, wie dies in der Abbildung dargestellt ist, er kann aber auch aus einen umlaufenden Vorsprung oder aus mehreren einzelnen sich radial in die Bohrung zur Aufnahme des Betätigungskolbens hinein erstreckenden einzelnen Vorsprüngen bestehen.

Es ist auch möglich, das Dichtelement (32) an seinen Stirnseiten (die Seiten, die an den Anschlägen [33, 29] zur Anlage kommen) mit Noppen oder radial verlaufenden Vorsprüngen zu versehen, so daß das Druckmittel aus der zweiten Steuerkammer (36) bzw. aus der Druckmittelkammer (27) die Stirnflächen des Dichtelementes sicher beaufschlagen kann, wobei diese Noppen bzw. Vorsprünge sich über wenigstens einen Teil der die entsprechende Stirnseite bildenden Fläche erstrecken.

Bei Funktionsausfall des Betätigungskolbens (24) wird bei Erreichen eines vorbestimmten Druckes in der Druckmittelkammer (27) der Ventilkörper (19) des zweiten Auslaßventils (18, 19) vom Ventilsitz (18) abgehoben und das Druckmittel in der Druckmittelkammer (27) durch den Auslaß (23) zur Atmosphäre hin geleitet. Diese Sicherheitsventilfunktion ist dadurch unter allen Betriebsbedingungen gewährleistet, daß die vom Druckmittel in der Druckmittelkammer (27) beaufschlagte Wirkfläche des Ventilkörpers (19) der zweiten Ventileinrichtung einen größeren Durchmesser aufweist als die den Betätigungskolben (24) aufnehmende Gehäusebohrung.

Das Druckregelventil kann, wie im Vorstehenden beschrieben, am Druckmittelausgang (14) ein in Strömungsrichtung öffnendes Rückschlagventil (15, 16) und einen vom Druckmittelausgang zur ersten Steuerkammer (8) führenden Kanal (13) aufweisen. Es kann aber auch fremdgesteuert werden, so daß auf das Rückschlagventil verzichtet werden kann. Für die Beaufschlagung der ersten Steuerkammer (8) kann ein nicht mit dem Druckmittelausgang verbundener separater Druckmittelanschluß vorgesehen werden.

Von Bedeutung für die Erfindung ist, daß das Dichtelement auf dem Betätigungskolben in Richtung der Längsachse des Betätigungskolbens verschiebbar angeordnet ist und sowohl an einem am Betätigungskolben angeordneten Anschlag als auch an einem gehäusefesten Anschlag zur Anlage bringbar ist und daß das Dichtelement sowohl vom Druck in der zweiten Steuerkammer als auch vom Druck in der den Druckmitteleingang mit dem Druckmittelausgang verbindenden Druckmittelkammer beaufschlagbar ist.

**Ansprüche**

1. Druckregelventil mit folgenden Merkmalen :
a) Es ist ein mit einer Druckmittelquelle verbindbarer Druckmitteleingang (28) und ein mit wenigstens einem Verbraucher verbundener Druckmittelausgang (14) vorgesehen ;
b) es ist ein Regelkolben (6) vorgesehen, welcher eine von einem Steuerdruck beaufschlagte erste Steuerkammer (8) begrenzt und der vom Steuerdruck in der ersten Steuerkammer (8) gegen die Kraft eines Regelelementes (4) verschiebbar ist ;
c) es ist eine vom Regelkolben (6) betätigbare erste Ventileinrichtung (9, 10, 11) vorgesehen, über welche die erste Steuerkammer (8) mit einer zweiten Steuerkammer (36) verbindbar ist ;
d) die zweite Steuerkammer (36) wird von einer ersten Wirkfläche (12) eines Betätigungskolbens (24) für eine zweite Ventileinrichtung (19, 18) begrenzt, welche in einer den Druckmitteleingang (28) mit dem Druckmittelausgang (14) verbindenden Druckmittelkammer (27) angeordnet ist und über welche die Druckmittelkammer (27) mit einem zur Atmosphäre hin führenden Druckmittelauslaß (23) verbindbar ist ;
e) die erste Wirkfläche (12) des Betätigungskolbens (24) ist so angeordnet, daß der Betätigungskolben (24) vom Druckmittel in der zweiten Steuerkammer (36) in Öffnungsrichtung der zweiten Ventileinrichtung (19, 18) bewegbar ist ;
f) der Betätigungskolben (24) wird von einem Dichtelement (32) umschlossen, welches die zweite Steuerkammer (36) und die Druckmittelkammer (27) gegeneinander abdichtet ; gekennzeichnet durch die folgenden Merkmale :
g) Das Dichtelement (32) ist in Richtung der Längsachse des Betätigungskolbens (24) verschiebbar auf dem Betätigungskolben (24) angeordnet ;
h) auf wenigstens einem Teil des Umfangs des Betätigungskolbens (24) ist ein erster Anschlag (29, 30) für das Dichtelement (32) angeordnet ;
i) der erste Anschlag (29, 30) ist auf der der zweiten Steuerkammer (36) abgewandten Seite des Dichtelementes (32) gelegen ;
j) es ist ein gehäusefester zweiter Anschlag (33) vorgesehen, welcher auf der der zweiten Steuerkammer (36) zugewandten Seite des Dichtelementes (32) gelegen ist ;
k) der erste Anschlag (29, 30) und der zweite Anschlag (33) sind derart zueinander angeordnet, daß das Dichtelement (32) zwischen den beiden Anschlägen (29, 30, 33) auf dem Betätigungskolben (24) verschiebbar ist.

2. Druckregelventil nach Anspruch 1, dadurch gekennzeichnet, daß am Druckmittelausgang (14) ein in Richtung auf den Verbraucher zu in die Offenstellung bringbares Rückschlagventil (15, 16) vorgesehen ist.

3. Druckregelventil nach Anspruch 1, dadurch gekennzeichnet, daß der erste Anschlag (29, 30) als ein am Betätigungskolben (24) angeordneter und den Betätigungskolben (24) umgebender Vorsprung ausgebildet ist.

4. Druckregelventil nach Anspruch 1, dadurch gekennzeichnet, daß der erste Anschlag (29, 30) von mehreren am Betätigungskolben (24) angeordneten sich in radialer Richtung nach außen erstreckenden Vorsprüngen gebildet wird.

5. Druckregelventil nach Anspruch 1, dadurch gekennzeichnet, daß der gehäusefeste zweite Anschlag von einem sich radial in Richtung auf den Betätigungskolben (24) zu erstreckenden umlaufenden Gehäusevorsprung gebildet wird.

6. Druckregelventil nach wenigstens einem der vorhergehenden Ansprüche, dadurch gekennzeichnet, daß der gehäusefeste zweite Anschlag von mehreren sich radial in Richtung auf den Betätigungskolben (24) zu erstreckenden Vorsprüngen gebildet wird.

7. Druckregelventil nach wenigstens einem der vorhergehenden Ansprüche, gekennzeichnet durch die folgenden Merkmale :

a) Der Betätigungskolben (24) wird mit seiner die zweite Steuerkammer (36) begrenzenden Seite in der zweiten Steuerkammer (36) geführt ;

b) an die zweite Steuerkammer (36) schließt eine sich auf die Druckmittelkammer (27) zu erstreckende Gehäusebohrung (31) an, die einen größeren Durchmesser aufweist als die zweite Steuerkammer (36) ;

c) die die zweite Steuerkammer (36) begrenzende Wand (35) und die die Gehäusebohrung (31) begrenzende Wand bilden eine Stufe (31. 33, 35), wobei eine Fläche (33) der Stufe (31, 33, 35) als gehäusefester Anschlag für das Dichtelement (32) dient ;

d) der am Betätigungskolben (24) angeordnete Anschlag (29, 30) erstreckt sich vom Betätigungskolben (24) weg in radialer Richtung bis an die die Gehäusebohrung (31) begrenzende Wand.

8. Druckregelventil nach wenigstens einem der vorhergehenden Ansprüche, dadurch gekennzeichnet, daß wenigstens eine einem Anschlag (33, 29) zugewandte Stirnseite des Dichtelementes (32) mit Noppen oder/und radial verlaufenden Vorsprüngen versehen ist, die sich wenigstens über einen Teil der die entsprechende Stirnseite bildende Fläche erstrecken.

9. Druckregelventil nach wenigstens einem der vorhergehenden Ansprüche, dadurch gekennzeichnet, daß die zweite Ventileinrichtung (18, 19) so ausgebildet ist, daß sie bei Erreichen oder Überschreiten eines vorbestimmten Druckes in der Druckmittelkammer (27) die Druckmittelkammer (27) mit der Atmosphäre verbindet.

## Claims

1. A pressure regulating valve with the following features :

a) a pressure medium input (28) arranged to be connected to a pressure medium source and a pressure medium output (14) connected to at least one consumer are provided ;

b) a regulating piston (6) is provided, which bounds a first control chamber (8) pressurized by a control pressure and which is displaceable by the control pressure in the first control chamber (8) against the force of a regulating element (4) ;

c) a first valve arrangement (9, 10, 11) operable by the regulating piston (6) is provided, by means of which the first control chamber (8) can be connected to a second control chamber (36) ;

d) the second control chamber (36) is bounded by a first effective area (12) of an operating piston (24) for a second valve arrangement (19, 18), which is arranged in a pressure medium chamber (27) connecting the pressure medium input (28) to the pressure medium output (14) and by means of which the pressure medium chamber (27) can be connected to a pressure medium outlet (23) leading to the atmosphere ;

e) the first effective area (12) of the operating piston (24) is arranged so that the operating piston (24) is movable by the pressure medium in the second control chamber (36) in the opening direction of the second valve arrangement (19, 18) ;

f) the operating piston (24) is surrounded by sealing element (32) which seals the second control chamber (36) and the pressure medium chamber (27) with respect to each other ;

characterized by the following features :

g) the sealing element (32) is arranged to be displaceable on the operating piston (24) in the direction of the longitudinal axis of the operating piston (24) ;

h) on at least a part of the circumference of the operating piston (24) there is arranged a first stop (29, 30) for the sealing element (32) ;

i) the first stop (29, 30) is positioned on the side of the sealing element (32) which is remote from the second control chamber (36) ;

j) a second stop (33) fixed on the housing is provided, which is positioned on the side of the sealing element (32) facing the second control chamber (36) ;

k) the first stop (29, 20) and the second stop (33) are arranged relative to each other so that the sealing element (32) is displaceable on the operating piston (24) between the two stops (29, 30, 33).

2. A pressure regulating valve according to claim 1, characterized in that a non-return valve (15, 16) arranged to be brought into the open position in the direction of the consumer is provided at the pressure medium output (14).

3. A pressure regulating valve according to claim 1, characterized in that the first stop (29, 30) is constructed as a projection arranged on the operating piston (24) and surrounding the operating piston (24).

4. A pressure regulating valve according to claim 1, characterized in that the first stop (29, 30) is formed by several radially outwardly extending projections arranged on the operating piston (24).

5. A pressure regulating valve according to claim 1, characterized in that the second stop fixed on the housing is formed by a circumferential housing projection extending radially in the direction of the operating piston (24).

6. A pressure regulating valve according to at least one of the preceding claims, characterized in that the second stop fixed on the housing is formed by several projections extending radially in the direction of the operating piston (24).

7. A pressure regulating valve according to at least one of the preceding claims, characterized by the following features :

a) the operating piston (24) is guided in the second control chamber (36) with its side bounding the second control chamber (36) ;

b) adjoining the second control chamber (36) is a housing bore (31) extending towards the pressure medium chamber (27), which housing bore has a larger diameter than the second control chamber (36) ;

c) the wall (35) bounding the second control chamber (36) and the wall bounding the housing bore (31) form a step (31, 33, 35), a face (33) of the step (31, 33, 35) serving as the housing stop for the sealing element (32) ;

d) the stop (29, 30) arranged on the operating piston (24) extends away from the operating piston (24) in a radial direction as far as the wall bounding the housing bore (31).

8. A pressure regulating valve according to at least one of the preceding claims, characterized in that at least one end face of the sealing element (32) facing a stop (33, 29) is provided with knobs and/or radially extending projections, which extend at least over a part of the area forming the corresponding end face.

9. A pressure regulating valve according to at least one of the preceding claims, characterized in that the second valve arrangement (18, 19) is constructed so that once a predetermined pressure in the pressure medium chamber (27) has been reached or exceeded it connects the pressure medium chamber (27) to the atmosphere.

## Revendications

1. Vanne de régulation manométrique où

a) il est prévu une entrée de fluide sous pression (28) pouvant être reliée à une source de fluide sous pression et une sortie de fluide sous pression (14) reliée à au moins un consommateur ;

b) il est prévu un piston de régulation (6) qui borne une première chambre de commande (8) soumise à une pression de commande et qui peut être déplacé par la pression de commande dans la première chambre de commande (8) contre la force d'un élément de régulation (4) ;

c) il est prévu un premier mécanisme de vanne (9, 10, 11) actionné par le piston de régulation (6) par lequel la première chambre de commande (8) peut être reliée à une seconde chambre de commande (36) ;

d) la seconde chambre de commande (36) est bornée par la première surface active (12) d'un piston d'actionnement (24) d'un second mécanisme de vanne (19, 18) qui est disposé dans une chambre sous pression (27) reliant l'entrée de fluide sous pression (28) à la sortie de fluide sous pression (14) et grâce auquel la chambre sous pression (27) peut être reliée à une ouverture d'échappement menant à l'atmosphère ;

e) la prière surface active (12) du piston d'actionnement (24) est disposée de manière à ce que le piston d'actionnement (24) puisse être déplacé par le fluide sous pression dans la seconde chambre de commande (36) dans la direction d'ouverture du second mécanisme de vanne (19, 18) ;

f) le piston d'actionnement (24) est entouré d'un élément d'étanchéité (32) qui assure l'étanchéité entre la seconde chambre de commande (36) et la chambre sous pression (27) ;

caractérisée en ce que

g) l'élément d'étanchéité (32) peut être déplacé sur le piston d'actionnement (24) dans la direction de l'axe longitudinal du piston ;

h) une prière butée (29, 30) est prévue sur au moins une partie de la circonférence du piston d'actionnement (24) pour l'élément d'étanchéité (32) ;

i) la première butée (39, 30) est située sur le côté de la face de l'élément d'étanchéité (32) opposée à la seconde chambre de commande (36) ;

j) il est prévu une seconde butée (33) solidaire du boîtier, qui se situe sur le côté de la face de l'élément d'étanchéité (32) tournée vers la seconde chambre de commande (36) ;

k) la première butée (29, 30) et la seconde butée (33) sont disposées l'une vis-à-vis de l'autre de manière à ce que l'élément d'étanchéité (32) puisse se déplacer sur le piston d'actionnement (24) entre les deux butées (29, 30, 33).

2. Vanne de régulation manométrique selon la revendication 1, caractérisée en ce qu'il est prévu à la sortie de fluide sous pression (14) un clapet antiretour (15, 16) pouvant être mis en position d'ouverture dans la direction du consommateur.

3. Vanne de régulation manométrique selon la revendication 1, caractérisée en ce que la première butée (29, 30) est une saillie circonférentielle entourant le piston d'actionnement (24) et formée sur celui-ci.

4. Vanne de régulation manométrique selon la revendication 1, caractérisée en ce que la première butée (29, 30) est formée de plusieurs saillies formées sur le piston d'actionnement (24) et s'étendant radialement vers l'extérieur.

5. Vanne de régulation manométrique selon la revendication 1, caractérisée en ce que la seconde butée solidaire du boîtier est formée par une saillie circonférentielle du boîtier s'étendant radialement dans la direction du piston d'actionnement (24).

6. Vanne de régulation manométrique selon au moins une des revendications précédentes, caractérisée en ce que la seconde butée solidaire du boîtier est formée de plusieurs saillies s'étendant radialement dans la direction du piston d'actionnement (24).

7. Vanne de régulation manométrique selon au moins une des revendications précédentes, caractérisée en ce que

a) le piston d'actionnement (24) est guidé dans la seconde chambre de commande (36) par sa face bornant la seconde chambre de commande (36);

b) la seconde chambre de commande (36) est suivie d'un alésage du boîtier (31) s'étendant vers la chambre sous pression (27) qui présente un diamètre supérieur à celui de la seconde chambre de commande (36) ;

c) la paroi (35) bornant la seconde chambre de commande (36) et la paroi bornant l'alésage du boîtier (31) forment un gradin (31, 33, 35) dont la face (33) sert de butée solidaire du boîtier pour l'élément d'étanchéité (32) ;

d) la butée (29, 30) disposée sur le piston d'actionnement (24) s'étend dans la direction radiale du piston d'actionnement (24) à la paroi bornant l'alésage du boîtier (31).

8. Vanne de régulation manométrique selon au moins une des revendications précédentes, caractérisée en ce qu'au moins une des faces de l'élément d'étanchéité (32) tournée vers une butée (33, 29) porte des boutons et/ou des saillies radiales qui s'étendent sur au moins une partie de la surface formant la face considérée.

9. Vanne de régulation manométrique selon au moins une des revendications précédentes, caractérisée en ce que le second mécanisme de vanne (18, 19) est formé de manière à ce que, lorsqu'une pression prédéterminée est atteinte ou dépassée dans la chambre sous pression (27), celle-ci est mise à l'atmosphère.